# EUROPEAN PATENT APPLICATION

(11) **EP 4 752 393 A1**
(43) Date of publication of application: **03.06.2026**
(21) Application number: 24383306.8
(22) Date of filing: 02.12.2024
(51) Int. Cl.: F16F 9/16, H02N 1/04

(54) **REGENERATIVE INTRUSION-EXTRUSION SHOCK ABSORBER**

(71) Applicant: Fundación Centro de Investigación Cooperativa de Energías Alternativas, CIC Energigune Fundazioa, 01510 Vitoria-Gasteiz, Álava (ES); National Technical University of Ukraine "Igor Sikorsky Kyiv Polytechnic Institute", 03056 Kyiv (UA)
(72) Inventor: STOUDENETS, Victor, Kyiv (UA); LISTOVSHCHYK, Leonid, Kyiv (UA); LESYK, Vasyl, Kyiv (UA); TSYRIN, Mykola, Kyiv (UA); GROSU, Yaroslav, 01002 Vitoria-Gasteiz (ES)
(74) Representative: ABG Intellectual Property Law, S.L.

(57) **Abstract**

The present invention refers to shock absorber, to a method of storing and/or delivering electricity comprising said shock absorber, the use of the shock absorber to store or deliver electricity such as in a vehicle; and to a vehicle comprising the shock absorber.

## Description

### TECHNICAL FIELD

The present invention relates to the field of shock absorbers. More specifically, the present invention relates to the field of intrusion-extrusion shock absorbers that are able to generate electricity from mechanical energy and to dissipate part of said mechanical energy.

### BACKGROUND

A shock absorber or damper is a device designed to absorb and damp shock impulses by converting the mechanical energy (in particular, the kinetic energy) of the shock into another form of energy (typically heat) which is then dissipated. Among other applications, the shock absorber is used in vehicles as one of the main components of the suspension system that prevents vibrations and sudden impacts from the road from being directly transferred to the vehicle body during driving, minimizing the oscillation movement in the spring to provide both safety and comfort.

Intrusion (wetting)/extrusion (drying) of fluids into/from lyophobic porous solids is known in many fields, including chromatography, nanofluidics, biology, and energy materials. It is currently an attractive process for various energy applications and has found utility in the design of shock absorbers. For example, Eroshenko V. A. et al. (Proc. IMechE Vol. 221 Part D: J. Automobile Engineering (2007) 301-312) used an intrusion/extrusion process to dissipate mechanical energy in an automobile shock absorber or damper.

However, as the world's energy consumption and demand increases, new devices and methods for storing and converting energy must be developed. One of the approaches in this field is based on the ability to convert mechanical energy into other types of energy such as electricity.

Unlike conventional shock absorbers which reduce the vibration through viscous damping and convert the kinetic energy into heat energy dissipated, regenerative shock absorbers are a recent type of shock absorbers that convert parasitic intermittent linear motion and vibration into useful energy, such as electricity. This harvested electrical energy can be stored in a battery for later use.

For example, US2014/0020993A1 describes a damper capable of harvesting electrical energy from mechanical energy. In particular, said damper combined intrusion/extrusion of a fluid in a porous body with a piezoelectric element used to harvest electrical energy. However, especially under high pressure, piezoelectric elements are known to be fragile.

Also, US2009/0243428A1 describes a mechanical to electrical conversion device that is able to harvest electrical energy from mechanical energy. In particular, said device combined a nanoporous electrode and a liquid electrolyte to modify electrostatic energy. Basically, the device is based on a change in the flow rate of the electrolyte that causes a change in the surface ionic structure at the electrolyte/electrode interface, which is used to harvest electrical energy. Nevertheless, the use of liquid electrolytes is a costly process, and the viscosity of electrolyte solutions is typically high, which may limit the rate of chemical reactions.

While the aforementioned prior art yielded promising results, the present inventors discovered that the systems were costly and/or exhibited rapid degradation, limiting their operational lifespan.

Therefore, it is desirable to develop shock absorbers capable of generating electricity from mechanical energy with increased durability and overall performance. Furthermore, it is essential to enhance the electrical energy generation of these shock absorbers while optimizing their mechanical energy dissipation.

### BRIEF DESCRIPTION OF THE INVENTION

The inventors of the present invention have developed a regenerative intrusion-extrusion shock absorber comprising electrodes, which is able to convert mechanical energy into electricity at least partially and to dissipate the rest of the mechanical energy.

Furthermore, the proposed shock absorber is capable of generating a notable voltage during intrusion-extrusion cycles, while maintaining a consistent amplitude of the generated voltage. Another advantage of the intrusion-extrusion shock absorber is that no external generators (such as piezo generators) are required to harvest electrical energy. Another benefit is that a non-ionic liquid, such as water, can be used as the intruding/extruding pressure transmission fluid in the intrusion-extrusion shock absorber. This results in a more robust and cost-effective regenerative intrusion-extrusion shock absorber (or damper).

Thus, a first aspect of the invention is directed to a shock absorber comprising:
- a cylindrical body (1);
- a rod (2) comprising a piston (3); and
- at least a pair of electrodes (6, 7);

wherein the cylindrical body (1) is adapted for guiding the rod (2);
wherein the rod (2) is adapted for moving reciprocally inside the cylindrical body in response to an external force;
wherein the piston (3) of the rod (2) is adapted for sealing the cylindrical body (1) defining at least one intrusion/extrusion chamber (4.1, 4.2) adapted for containing a pressure transmission fluid;
wherein the at least one chamber (4.1, 4.2) comprises a porous material suitable for intrusion/extrusion of the pressure transmission fluid; and
wherein the shock absorber is characterized in that the porous material is in contact or in close proximity with one or with two electrodes of the at least a pair of electrodes (6, 7), thus being capable of generating electricity.

In a second aspect, the invention is directed to a method of storing and/or delivering electricity comprising the steps of:
a) providing
   - a shock absorber according to the invention and in any of its particular embodiments; and
   - at least one pressure transmission fluid;
b) compressing the at least one pressure transmission fluid to reach a pressure inside the at least one intrusion/extrusion chamber (4.1, 4.2) of the shock absorber such that the at least one pressure transmission fluid intrudes into the porous material;
c) decompressing the at least one pressure transmission fluid to reach a pressure inside the at least one intrusion/extrusion chamber (4.1, 4.2) of the shock absorber such that said at least one pressure transmission fluid extrudes out of the porous material; and
d) optionally repeating steps (b) and (c).

In another aspect, the invention is directed to the use of the shock absorber according to the invention and in any of its particular embodiments, to store and/or deliver electricity.

In another aspect, the invention is directed to the use of the shock absorber according to the invention and in any of its particular embodiments in a vehicle, preferably in a suspension system of a vehicle. Similarly, the invention is also directed to a vehicle comprising the shock absorber according to the invention and in any of its particular embodiments, preferably in a suspension system of the vehicle.

These aspects and preferred embodiments thereof are additionally also defined hereinafter in the detailed description and in the claims.

All the features described in this specification (including the claims, description and drawings) can be combined in any combination, with the exception of combinations of such mutually exclusive features.

### FIGURES

To better understand the invention, its objects and advantages, the following figures are attached to the specification:
**Figure 1** shows a sectional view of the regenerative intrusion-extrusion shock absorber according to example 1 of the present invention.
**Figure 2** shows a scheme of a regenerative intrusion-extrusion shock absorber according to one embodiment of the present invention comprising two hydraulic chambers: left (9.1) and right (9.2), surrounding two chambers for intrusion/extrusion, left (4.1) and right (4.2), each of said intrusion/extrusion chambers comprising: two compartments, (4a.1, 4b.1) and (4a.2, 4b.2), respectively; two electrodes (6, 7), a filter (5) and a porous material.
**Figure 3** shows an external view of another embodiment of a regenerative intrusion-extrusion shock absorber of the present invention.
**Figure 4** shows the pressure (dashed line) and voltage (solid line) variation over time during three compression-decompression cycles of the regenerative intrusion-extrusion shock absorber according to example 1 of the present invention.
**Figure 5** shows the pressure (dashed line) and voltage (solid line) variation over time during compression-decompression cycling of the regenerative intrusion-extrusion shock absorber according to example 1 of the present invention.
**Figure 6** shows a force vs displacement diagram of the regenerative intrusion-extrusion shock absorber according to example 1 of the present invention.

### Reference Signs of Drawings

- 1: hollow cylindrical body or cylinder
- 2: rod
- 2.1: left working hydraulic (sub)chamber
- 2.2: right working hydraulic (sub)chamber
- 3: piston
- 3.1: left hydraulic (sub)chamber
- 3.2: right hydraulic (sub)chamber
- 4.1: left intrusion/extrusion chamber
- 4a.1: first compartment of the chamber (4.1)
- 4b.1: second compartment of the chamber (4.1) comprising porous material
- 4.2: right intrusion/extrusion chamber
- 4a.2: first compartment of the chamber (4.2)
- 4b.2: second compartment of the chamber (4.2) comprising porous material
- 5: filter
- 6: electrode
- 7: counter electrode
- 8: seal
- 9.1: left hydraulic chamber
- 9.2: right hydraulic chamber
- 10.1: left valve
- 10.2: right valve
- 11.1: left throttle
- 11.2: right throttle
- 12: pressure sensor
- 13: compensating chamber

### DETAILED DESCRIPTION OF THE INVENTION

### Definitions

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise. It will be further understood that the terms "comprises" and/or "comprising", when used in this specification, specify the presence of stated features, steps, operations, elements, and/or components, but do not preclude the presence or addition of one or more other features, steps, operations, elements, and/or components thereof. The term "comprises" encompasses the terms "consisting essentially of" and "consisting of".

As used herein, the term "and/or" is meant to include any combination of elements as well as the alternative inclusion of one or more elements.

As used herein, the term "approximately" or "about" as applied to one or more values of interest, refers to a value that is similar to a stated reference value. In certain embodiments, the term "approximately" or "about" refers to a value that can vary up to ± 20 %, preferably within ± 10 %, and more preferably within ± 5 % of the stated reference value. When "approximately" or "about" is used before a numerical range, it applies to the upper and lower range end-points.

Indeed, the skilled person knows that numerical values relating to measurements are subject to measurement errors which place limits on their accuracy. Where terms such as "about" or "approximately" are applied to a particular value (e.g., "about 200 °C" or "approximately 200 °C") or to a range (e.g., "about x to approximately y"), the value or range may be interpreted as being as accurate as the method used to measure it. Unless explicitly stated otherwise, the general convention in the scientific and technical literature may be applied so that the last digit of numerical values preferably indicates the precision of measurement. Thus, unless other error margins are given, the maximum margin is preferably ascertained by applying the rounding-off convention to the last decimal place. For instance, a value of 3.5 preferably has an error margin of 3.45 to 3.54 and a range of 2% to 10% preferably covers a range of 1.5% to 10.4%. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 % to about 5 %" should be interpreted to include not only the explicitly recited values of about 1 % to about 5 %, but also include individual values and sub-ranges within the indicated range. Thus, included in this numerical range are individual values such as 2, 3 and 4 and sub-ranges such as from 1-3, from 2-4, and from 3-5, etc. This same principle applies to ranges reciting only one numerical value. It should also be understood that ranges formed by combination of any of the end points of different disclosed ranges and/or particular values therein are included in the present disclosure.

### Shock absorber

A first aspect of the invention is directed to a shock absorber comprising at least a pair of electrodes (6, 7) as defined above.

Apart from dissipating some mechanical energy as conventional shock absorbers, the shock absorber of the present invention is an intrusion-extrusion electric regenerator, i.e. a shock absorber able to generate electrical energy from mechanical energy based on the intrusion-extrusion phenomena. To this end, the shock absorber comprises a porous material suitable for intrusion/extrusion of a pressure transmission fluid upon compression/decompression of the fluid. In addition, the porous material is in contact or in close proximity with one or with two electrodes of the at least a pair of electrodes (6, 7), thus being capable of generating electricity.

The terms "intrusion" and "extrusion" are used in the context of the present invention in accordance with their normal meaning in the art. The term "intrusion" refers to the pressure transmission fluid entering the pores or cavities of the porous material by overcoming capillarity or other forces, upon application of an external force.

The term "extrusion" is understood as opposite action of intrusion and refers to the pressure transmission fluid exiting the pores or cavities of the porous material when the external force decreases or stops.

In an embodiment, there is a gap between the two electrodes (6, 7) of the at least a pair of electrodes (6, 7), preferably of from about 0.1 mm to about 2 mm, or from about 0.5 mm to about 1.5 mm, or about 1 mm.

Preferably, the porous material is closer to one of the electrodes than to the other one of the at least a pair of electrodes (6, 7). In an embodiment, the porous material is in contact or in close proximity with only one electrode (6) of the two electrodes (6, 7) of the at least a pair of electrodes (6, 7); preferably is in contact with only one electrode (6) of the two electrodes (6, 7); more preferably is in electrical contact with only one electrode (6) of the two electrodes (6, 7).

In an embodiment, one electrode (6) of the two electrodes (6, 7) of the at least a pair of electrodes (6, 7) is embedded in the porous material.

In an embodiment, the shock absorber has a pair of electrodes (6, 7). In another embodiment, the shock absorber has two pairs of electrodes (6, 7).

In an embodiment, one electrode (6) of the two electrodes (6, 7) of the pair of electrodes (6, 7) is shaped as a stick and it is embedded in the porous material. In another embodiment, one electrode (6) of the two electrodes (6, 7) of each of the two pairs of electrodes (6, 7) is shaped as a stick and it is embedded in the porous material.

Surprisingly, it has been found that, when the porous material is in contact or in close proximity with only one (6) of the two electrodes (6, 7), this asymmetric configuration of the shock absorber allows electricity to be generated with low or even zero bias voltage. In a particular embodiment, the shock absorber produces electrification without any bias voltage or with a low bias voltage of up to about 0.1 V (that is, it is capable of generating electricity with a bias voltage ranging from 0 to about 0.1 V). Consequently, this results in a reduction in degradation and an increase in the stability of the porous material. Thus, by operating with a low or even a zero bias voltage, the shock absorber is more durable and robust.

The cylindrical body (1) is adapted for guiding the rod (2) of the shock absorber. In addition, the rod (2) is adapted for moving inside the cylindrical body, particularly in response to an external force. Thus, the rod (2) comprising a piston (3), is guided and supported by the cylindrical body (1) during its movement inside the cylindrical body (1) in response to an external force. In a particular embodiment, the cylindrical body (1) comprises guiding means for guiding the rod (2). In a particular embodiment, the cylindrical body (1) comprises supporting means for supporting the rod (2).

The rod (2) comprising a piston (3) is adapted for moving inside the cylindrical body in a reciprocating movement along the longitudinal axis of the cylindrical body (1), preferably in a reciprocating and regularly repeated movement; particularly, by doing a repetitive up-and-down or back-and-forth linear movement, particularly in response to an external force.

In addition, the piston (3) of the rod (2) is adapted for defining or forming at least one chamber (4.1, 4.2) in association with the cylindrical body (1); wherein said chamber is adapted for containing a pressure transmission fluid. In a particular embodiment, the piston (3) of the rod (2) comprises sealing means for sealing the cylindrical body; preferably such that at least one chamber (4.1, 4.2) is defined.

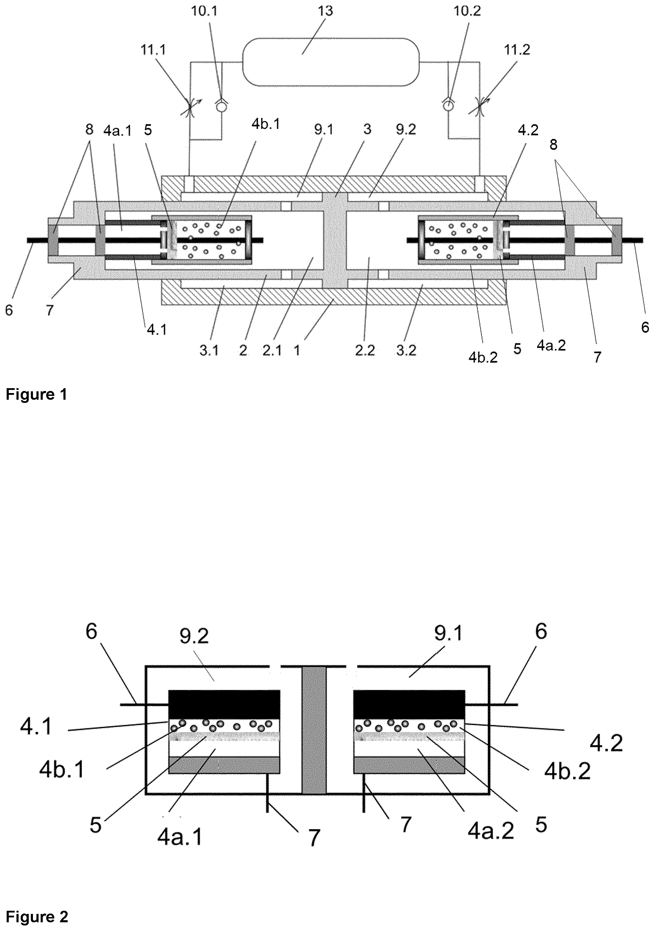

In a preferred embodiment, the piston (3) of the rod (2) is adapted for sealing the cylindrical body (1) defining two chambers (4.1, 4.2) adapted for containing a pressure transmission fluid wherein at least one of the at least one chamber (4.1, 4.2), preferably the two chambers (4.1, 4.2), comprises a porous material suitable for intrusion/extrusion of the pressure transmission fluid. For simplicity, chambers (4.1, 4.2) may be herein referred to as intrusion/extrusion chambers, although in absence of at least one hydraulic chamber (9.1, 9.2) they may also provide a hydraulic function. Both figures 1 and 2 relate to shock absorbers comprising two chambers (4.1, 4.2) for intrusion/extrusion.

In another preferred embodiment, the rod (2) comprising a piston (3) further combines with the cylindrical body (1) to define or form at least one chamber (9.1, 9.2), adapted for containing a pressure transmission fluid, so that the at least one chamber (9.1, 9.2) is in physical contact with (preferably surrounding or enclosing) the at least one chamber (4.1, 4.2) allowing the transmission of pressure changes between the pressure transmission fluids of the at least one chamber (9.1, 9.2) and of the at least one chamber (4.1, 4.2). That is, the physical contact is done in a way that the compression/decompression forces exerted on the at least one chamber (9.1, 9.2) in response to an external force are transmitted to the at least one chamber (4.1, 4.2). The at least one chamber (9.1, 9.2) is aimed at improving the hydraulic performance of the shock absorber, in particular of the at least one chamber (4.1, 4.2) for intrusion/extrusion. For simplicity, chambers (9.1, 9.2) may be herein referred to as hydraulic chambers. More preferably, the rod (2) comprising a piston (3) further combines with the cylindrical body (1) to form two chambers (9.1, 9.2), adapted for containing a pressure transmission fluid, so that left chamber (9.1) and right chamber (9.2) are in physical contact with (preferably surrounding or enclosing) the left chamber (4.1) and right chamber (4.2), respectively. In doing so, each hydraulic chamber (9.1, 9.2), when compressed and decompressed in response to an external force, is able to compress and decompress its respective chamber (4.1, 4.2) such that the pressure transmission fluid contained inside intrudes into or extrudes out of the porous material. Both figures 1 and 2 relate to shock absorbers comprising two chambers (9.1, 9.2) for hydraulic improvement and two chambers (4.1, 4.2) for intrusion/extrusion; wherein each of the two chambers (9.1, 9.2) for hydraulic improvement encloses or surrounds a chamber for intrusion/extrusion (4.1, 4.2) .

More preferably, at least one hydraulic chamber (9.1, 9.2), preferably the two hydraulic chambers (9.1, 9.2), comprises a central or inner subchamber herein referred to as working hydraulic subchambers (2.1, 2.2) and a side or outer subchamber herein referred to as hydraulic subchambers (3.1, 3.2), wherein each working hydraulic subchamber (2.1, 2.2) is in fluidic communication with its corresponding hydraulic subchamber (3.1, 3.2), preferably through at least one orifice in the rod (2) wall. In a particular embodiment, the central or inner subchamber herein referred to as working hydraulic subchamber (2.1, 2.2), is defined by the inner space between the rod (2) and a chamber for intrusion/extrusion (4.1, 4.2). Thus, in an embodiment, a working hydraulic subchamber (2.1, 2.2) surrounds or encloses a chamber for intrusion/extrusion (4.1, 4.2). In another particular embodiment, the side or outer subchamber herein referred to as hydraulic subchamber (3.1, 3.2), is the outer space defined between the rod (2) and the cylindrical body (1). Thus, the working hydraulic subchambers (2.1, 2.2) and hydraulic subchambers (3.1, 3.2) of the the hydraulic chambers (9.1, 9.2) may be arranged in a coaxial or concentric configuration. In a particular embodiment, the left working hydraulic subchamber (2.1) and right working hydraulic subchamber (2.2) are in fluidic communication with left hydraulic subchamber (3.1) and right hydraulic subchamber (3.2), respectively, through two orifices in the rod (2) wall. In a particular embodiment, the left working hydraulic subchamber (2.1) and right working hydraulic subchamber (2.2) are separated by the piston (3) preferably not being in direct fluidic communication between them. In a particular embodiment, the left hydraulic subchamber (3.1) and right hydraulic subchamber (3.2) are separated by the piston (3) preferably not being in direct fluidic communication between them.

In a preferred embodiment, the at least working hydraulic subchamber (2.1, 2.2) is in physical contact with (preferably surrounding or enclosing) the at least one intrusion/extrusion chamber (4.1, 4.2).

Preferably, at least one of the chambers (2.1, 2.2, 3.1, 3.2, 4.1, 4.2, 9.1, 9.2) of the shock absorber are cylindrical. More preferably, all the chambers (2.1, 2.2, 3.1, 3.2, 4.1, 4.2, 9.1, 9.2) of the shock absorber are cylindrical.

In an embodiment, the piston (3) of the rod (2) and/or the rod (2) are configured to move inside the cylindrical body (1) in response to an external force such that the volume of the at least one chamber (4.1, 4.2) for intrusion/extrusion changes; when present, the volume of the at least one hydraulic chamber (9.1, 9.2) or its subchambers (2.1, 2.2, 3.1, 3.2) also changes contributing to improve the hydraulic performance. For example, the volume of the respective chambers may be increased or reduced such that the pressure of the pressure transmission fluid is increased or reduced accordingly. In particular, when the volume of the at least one intrusion/extrusion chamber (4.1, 4.2), and if present of the optional at least one hydraulic chamber (9.1, 9.2) or of its subchambers (2.1, 2.2, 3.1, 3.2), is reduced as consequence of the piston (3) of the rod (2) movement or displacement inside the cylindrical body (1) in response to an external force, then, the pressure transmission fluid is pressurized and intrudes the porous material. Conversely, when the volume of the at least one intrusion/extrusion chamber (4.1, 4.2), and if present of the optional at least one hydraulic chamber (9.1, 9.2) or of its subchambers (2.1, 2.2, 3.1, 3.2), is increased as consequence of the piston (3) of the rod (2) movement or displacement inside the cylindrical body (1) in response to an external force, then, the pressure transmission fluid is depressurized and extrudes the porous material. In particular, the rod (2) is adapted to move inside the cylindrical body (1) in a cyclic repetitive up-and-down or back-and-forth linear movement, such that there is intrusion and extrusion cycles of the pressure transmission fluid in the porous material. Therefore, a part of the external mechanical energy applied to the rod (2) can be dissipated, damped or attenuated and additionally electrical energy is generated thought intrusion/extrusion and can be harvested through the electrodes. This harvested electrical energy can be stored in a battery for later use.

In a preferred embodiment, the physical contact between the at least one chamber (9.1, 9.2), or its subchambers if present, and the at least one chamber (4.1, 4.2) does not allow fluidic communication among them.

The at least one hydraulic chamber (9.1, 9.2), or its subchambers (2.1, 2.2, 3.1, 3.2) if present, and the at least one intrusion/extrusion chamber (4.1, 4.2) are adapted for changing its volume; particularly for increase or reduce its volume such that the pressure of the respectively pressure transmission fluid is increased or reduced accordingly.

In a preferred embodiment, the physical contact between the at least one hydraulic chamber (9.1, 9.2), or its subchambers (2.1, 2.2, 3.1, 3.2) if present, and the at least one intrusion/extrusion chamber (4.1, 4.2) is done through a wall configured to bend that partially or totally encloses the at least one chamber (4.1, 4.2). More preferably, the working hydraulic subchambers (2.1, 2.2) are in physical contact with their respective intrusion/extrusion chambers (4.1, 4.2) through a wall configured to bend that partially or totally encloses the at least the intrusion/extrusion chambers (4.1, 4.2).

In an embodiment, the wall configured to bend is made of a flexible material such a flexible polymeric material, prefably a polysiloxane based material.

In an embodiment, the wall configured to bend is adapted for bending when the pressure of the pressure transmission fluid of the at least one hydraulic chamber (9.1, 9.2) or its subchambers (2.1, 2.2, 3.1, 3.2) and the pressure of the pressure transmission fluid of the at least one intrusion/extrusion chamber (4.1, 4.2) is different between them.

Particularly, the wall configured to bend is adapted for transmitting pressure changes between the pressure transmission fluids of the at least one hydraulic chamber (9.1, 9.2) or its subchambers (2.1, 2.2, 3.1, 3.2) and of the at least one intrusion/extrusion chamber (4.1, 4.2).

In a particular embodiment, at least one intrusion/extrusion chamber (4.1, 4.2) comprises a filter (5) configured to allow the pressure transmitting fluid to pass there through and to not allow the porous material to pass there through; wherein the filter divides the intrusion/extrusion chamber into a first compartment (4a.1, 4a.2) and a second compartment (4b.1, 4b.2).

In a particular embodiment, the filter has an averaged pore size of below about 1 µm; preferably below about 0.8 µm; more preferably below about 0.6 µm; wherein the pore size has been measured with any method known in the art; preferably nitrogen adsorption methods.

The authors have noted that the filter effectively prevents the porous material from flowing, thereby surprisingly extending the lifespan of the shock absorber.

In a particular embodiment, the intrusion/extrusion chamber (4.1, 4.2) comprises a filter (i) adapted for allowing the pressure transmitting fluid to pass there through and (ii) adapted for not allowing the porous material to pass there through; wherein the filter divides the intrusion/extrusion chamber into a first compartment (4a.1, 4a.2) and a second compartment (4b.1, 4b.2). In a more particular embodiment, the first compartment (4a.1, 4a.2) is adapted to contain the pressure transmission fluid of the at least one chamber (4.1, 4.2) and/or the second compartment (4b.1, 4b.2)is adapted to contain the porous material preferably submerged or immersed in the pressure transmission fluid of the at least one chamber (4.1, 4.2). In a more particular embodiment, the wall configured to bend is part of the second compartment (4b.1, 4b.2). In another more particular embodiment, the wall configured to bend partly or totally encloses the second compartment (4b.1, 4b.2) whereas the first compartment (4a.1, 4a.2) preferably has a rigid wall.

In an embodiment, the rod (2) is configured to move inside the cylindrical body (1) in response to an external force such that the volume of the at least one hydraulic chamber (9.1, 9.2), or its subchambers (2.1, 2.2, 3.1, 3.2), changes. For example, the volume of the at least one hydraulic chamber (9.1, 9.2), or its subchambers (2.1, 2.2, 3.1, 3.2), may be increased or reduced in response to an external force such that the pressure on the pressure transmission fluid of the at least one closed space (39.1, 9.2), or its subchambers (2.1, 2.2, 3.1, 3.2), is increased or reduced accordingly.

In particular, the at least one hydraulic chamber (9.1, 9.2), or its subchambers (2.1, 2.2, 3.1, 3.2), is configured to change its volume because of the piston (3) of the rod (2) movement or displacement inside the cylindrical body (1) in response to an external force. When the volume of the at least one hydraulic chamber (9.1, 9.2), or its subchambers (2.1, 2.2, 3.1, 3.2), is reduced then, the pressure transmission fluid of the at least one hydraulic chamber (9.1, 9.2), or its subchambers (2.1, 2.2, 3.1, 3.2), pressurizes at least one intrusion/extrusion chamber (4.1, 4.2), e.g. the wall configured to bend, such that the pressure transmission fluid of the at least one intrusion/extrusion chamber (4.1, 4.2) intrudes the porous material. Therefore, a part of the externally exerted mechanical (kinetic) energy can be dissipated, damped or attenuated and electrical energy is generated thought intrusion/extrusion and can be harvested through the electrodes.

The authors have noted that when the shock absorber comprises at least one intrusion/extrusion chamber (4.1, 4.2) and at least one hydraulic chamber (9.1, 9.2), preferably divided into subchambers (2.1, 2.2, 3.1, 3.2), the mechanical energy can be dissipated, damped or attenuated more efficiently.

In an embodiment, the shock absorber comprises a compensating chamber (13) in fluidic communication with the at least one intrusion/extrusion chamber (4.1, 4.2) or with the at least one hydraulic chamber (9.1, 9.2) or its subchambers (2.1, 2.2, 3.1, 3.2). In a particular embodiment, the at least one intrusion/extrusion chamber (4.1, 4.2) or the at least one hydraulic chamber (9.1, 9.2) or its subchambers (2.1, 2.2, 3.1, 3.2) of the shock absorber is in fluidic communication with a compensating chamber (13) such that the pressure transmission fluid can flow between them. In an embodiment, the at least one intrusion/extrusion chamber (4.1, 4.2) or the at least one hydraulic chamber (9.1, 9.2) or its subchambers (2.1, 2.2, 3.1, 3.2)of the shock absorber is in fluidic communication with a compensating chamber (13) through connecting means such that valve(s) and/or throttle(s).

In a more particular embodiment, the shock absorber comprises a compensating chamber (13) in fluidic communication with the at least one hydraulic chamber (9.1, 9.2), or any or its subchambers (2.1, 2.2, 3.1, 3.2). In a particular embodiment, the at least one chamber (9.1, 9.2), or any one of its subchambers (2.1, 2.2, 3.1, 3.2), of the shock absorber is in fluidic communication with a compensating chamber (13) such that the pressure transmission fluid can flow between them. In an embodiment, the at least one hydraulic chamber (9.1, 9.2), or any one of its subchambers (2.1, 2.2, 3.1, 3.2), of the shock absorber is in fluidic communication with a compensating chamber (13) through connecting means such that valve(s) and/or throttle(s).

In a more particular embodiment, the shock absorber comprises a compensating chamber (13) in fluidic communication with the at least one hydraulic subchamber (3.1, 3.2). In a particular embodiment, the at least one hydraulic subchamber (3.1, 3.2) of the shock absorber is in fluidic communication with a compensating chamber (13) such that the pressure transmission fluid can flow between them. In an embodiment, the at least one hydraulic subchamber (3.1, 3.2) of the shock absorber is in fluidic communication with a compensating chamber (13) through connecting means such that valve(s) and/or throttle(s).

In an embodiment, the shock absorber comprises means adapted for measuring the pressure (12) such as a pressure sensor.

In a more particular embodiment, the shock absorber comprises:
- a cylindrical body (1);
- a rod (2) comprising a piston (3); and
- at least a pair of electrodes (6, 7);

wherein the cylindrical body (1) is adapted for guiding the rod (2);
wherein the rod (2) is adapted for moving reciprocally inside the cylindrical body in response to an external force;
wherein the piston (3) of the rod (2) is adapted for sealing the cylindrical body (1) defining at least one chamber (4.1, 4.2) adapted for containing a first pressure transmission fluid;
wherein the at least one chamber (4.1, 4.2) comprises a porous material suitable for intrusion/extrusion of the pressure transmission fluid;
wherein the rod (2) comprising a piston (3) further combines with the cylindrical body (1) to form at least one chamber (9.1, 9.2), adapted for containing a second pressure transmission fluid, so that the at least one chamber (9.1, 9.2) is in physical contact with, preferably surrounding or enclosing, the at least one chamber (4.1, 4.2), such that it allows the transmission of pressure changes between the pressure transmission fluids of the at least one chamber (9.1, 9.2) and of the at least one chamber (4.1, 4.2);
wherein said physical contact is preferably done through a wall configured to bend that does not allow fluidic communication;
wherein the shock absorber is characterized in that the porous material is in contact or in close proximity with one or with the two electrodes of the at least a pair of electrodes (6, 7) thus being capable of generating electricity;
preferably wherein the porous material is in contact with only one electrode (6) of the at least a pair of electrodes (6, 7).

In an embodiment, the shock absorber has a pair of electrodes (6, 7); wherein the porous material is in contact or in close proximity with one or with the two electrodes of the pair of electrodes (6, 7) thus being capable of generating electricity; preferably with one electrode (6) of the pair of electrodes (6, 7); more preferably is in electric contact.

In another particular embodiment, the rod (2) comprising a piston (3) further combines with the cylindrical body (1), defining a left hydraulic chamber (9.1) and a right hydraulic chamber (9.2), preferably comprising respectively a left working hydraulic subchamber (2.1) and a left hydraulic subchamber (3.1), and a right working hydraulic subchamber (2.2) and a right hydraulic subchamber (3.2), said chambers being adapted for containing a second pressure transmission fluid; wherein the left hydraulic chamber (9.1) or any of its subchambers (2.1, 3.1) comprises a left intrusion/extrusion chamber (4.1) and the right chamber (9.2) or any of its subchambers (2.3, 3.2) comprises a right intrusion/extrusion chamber (4.2) In a particular embodiment, the left chambers or subchambers (2.1, 3.1, 4.1, 9.1) has the same features than the right chambers or subchambers (2.2, 3.2, 4.2, 9.2). In a particular embodiment, the shock absorber has two pairs of electrodes (6, 7) and two porous materials each of the porous material in each of the intrusion/extrusion chambers (4.1, 4.2); wherein each of the porous material is in contact or in close proximity with one or with the two electrodes of each pair of electrodes (6, 7) thus being capable of generating electricity; preferably with one electrode (6) of each pair of electrodes (6, 7); more preferably is in electric contact.

In an embodiment, the at least one hydraulic chamber (9.1, 9.2), or its subchambers (2.1, 2.2, 3.1, 3.2), is configured to change its volume because of the piston (3) of the rod (2) movement or displacement inside the cylindrical body (1) in response to an external force. When the volume of the left hydraulic chamber (9.1) or its subchambers (2.1, 3.1) is reduced then, the pressure transmission fluid (for example, oil) pressurizes the wall configured to bend of the left intrusion/extrusion chamber (4.1) such that the pressure transmission fluid of the left intrusion/extrusion chamber (4.1) (for example, water) intrudes the porous material. At the same time, the opposite occurs in the right hydraulic chamber (9.2) or its subchambers (2.2, 3.2) and the right intrusion/extrusion chamber (4.2). Therefore, a part of the externally exerted mechanical energy can be dissipated, damped or attenuated and electrical energy is generated thought intrusion/extrusion and can be harvested through the electrodes.

### Pressure transmission fluid(s)

In an embodiment, the shock absorber further comprises a pressure transmission fluid. Alternatively, the pressure transmission fluid(s) may be provided separately and introduced in the shock absorber for working.

The pressure transmission fluid is normally a liquid, including but not limited to, non-ionic liquids such as water or other polar liquid, ionic liquids such as an aqueous electrolyte solution and oils such as mineral oils.

Preferably, the pressure transmission fluid of the at least one intrusion/extrusion chamber (4.1, 4.2) is specially adapted or suitable for intruding the porous material when it is pressurized and for extruding the porous material when it is depressurized. More preferably, the pressure transmission fluid of the at least one chamber (4.1, 4.2) for intrusion/extrusion is a non-ionic liquid; more preferably is a polar liquid; even more preferably is water.

Preferably, the pressure transmission fluid of the at least one hydraulic chamber (9.1, 9,2), or its subchambers (2.1, 2.2, 3.1, 3.2), is specially adapted or suitable for enhancing the hydraulic efficiency of the shock absorber. More preferably, the pressure transmission fluid of the at least one chamber (9.1, 9.2) is a liquid having a viscosity of between 60 and 120 cP (0.06-0.12 Pa·s); preferably between 80-100 cP (0.08-0.10 Pa·s); wherein the viscosity values of said liquid have been measured as dynamic viscosity by means known in the art such as a viscometer at about 25°C. Typically, the pressure transmission fluid of the at least one chamber (9.1, 9.2) is an oil, preferably a mineral oil.

In an embodiment, the shock absorber comprises:
- the pressure transmission fluid of the at least one chamber (4.1, 4.2) for intrusion/extrusion; and
- the pressure transmission fluid of the at least one chamber (9.1, 9.2), or its subchambers (2.1, 2.2, 3.1, 3.2), for hydraulic improvement.

In a particular embodiment, the pressure transmission fluid of the at least one intrusion/extrusion chamber (4.1, 4.2) is different from the pressure transmission fluid of the at least one hydraulic chamber (9.1, 9.2), or its subchambers (2.1, 2.2, 3.1, 3.2), wherein said respective pressure transmission fluids are preferably as defined above.

In the context of the present invention, the expression "nonionic liquid(s)" is understood as in the art, for example, those liquids consisting of molecules or compounds that do not dissociate into ions, in particular they have negligible conductivities, but they can be polarized by an electric field.

### Electrodes

In the context of the present invention the term "electrodes" refers to positive and negative electrodes of the shock absorber of the invention. The electrodes may also be referred to as the electrode (6) and counter electrode (7). The electrodes (6, 7) forming a pair of electrodes (6, 7) of the invention comprise, at least, a positive electrode and a negative electrode. Both electrodes (6, 7) may have connection terminals that may be electrically connected to them by a connection wire through which electrons are able to travel.

When the cylindrical body (1) defines two chambers (4.1, 4.2) adapted for containing a pressure transmission fluid and comprising a porous material suitable for intrusion/extrusion of the pressure transmission fluid, the shock absorber preferably comprises two pair of electrodes (6, 7), wherein each pair is associated with each one of the chambers (4.1, 4.2).

The electrodes (6, 7) may be made of the same or of different material. In an embodiment, one or both electrodes (6, 7) are made of stainless steel.

The electrodes (6, 7) can be placed in any arrangement with a gap between them. For instance, the electrodes (6, 7) may be disposed parallel, perpendicularly or forming an angle between them. In a particular embodiment, one electrode (6) of the two electrodes is a rod, and the other electrode (7) is a hollow cylinder surrounding part of said rod. In a more particular embodiment, the hollow cylinder is part of the rod (2).

The two electrodes (6, 7) are separated from each other by a gap. In an embodiment, the gap between the electrodes of the shock absorber of the present invention comprises the pressure transmission fluid. In a particular embodiment, the gap between the electrodes of the shock absorber of the present invention further comprises the porous material; preferably wherein the porous material is submerged, immersed or embedded in the pressure transmission fluid. Thus, the pressure transmission fluid may fill the gap.

In an embodiment, the gap between the two electrodes comprises or consists of a porous material suitable for intrusion-extrusion of a pressure transmission fluid and a pressure transmission fluid; wherein the porous material is submerged or immersed in the pressure transmission fluid. In a similar embodiment, the gap between the two electrodes is filled by the porous material suitable for intrusion-extrusion of a pressure transmission fluid and the pressure transmission fluid; wherein the porous material is submerged or immersed in said pressure transmission fluid.

### Porous material

The porous material is lyophobic with respect to its pressure transmission fluid, i.e. has little or no chemical affinity for the pressure transmission fluid and therefore exhibits intrusion-extrusion cycle with it. For example, if the pressure transmission fluid is water, the lyophobic material is hydrophobic. Lyophobicity of the porous material of the invention with respect to the pressure transmission fluid may be measured by any method known in the art; preferably by contact angle measurements i.e. by measuring the contact angle of a drop of the pressure transmission fluid deposited on the surface of said porous material, if the contact angle is greater than 90 degrees said material is lyophobic and if the contact angle is greater than 150 degrees said material is superlyophobic. When the pressure transmission fluid used is water or an aqueous solution and produces said contact angles, the porous material may be specifically named as hydrophobic and superhydrophobic, respectively.

In the context of the present invention, the term "porous material" refers to a material that has porosity or void fraction which is a measure of the void (i.e. "empty") spaces in a material, and is a fraction of the volume of voids over the total volume, express as being between 0 and 1, or as a percentage between 0% and 100%.

In a particular embodiment the porous material of the invention is a microporous, mesoporous, or macroporous material or any mixture thereof. Preferably, the porous material of the invention is a nanoporous material.

In the context of the present invention and in accordance with the IUPAC recommendations, the term "microporous material" refers to a material having pores of between 0.2 and 2 nm of size, the term "mesoporous material" refers to a material having pores of between 2 and 50 nm of size, the term "macroporous material" refers to a material having pores above 50 nm of pore size, and the term "nanoporous material" refers to a material having pores below 100 nm of pore size. That is, nanoporous embraces the other three categories, but with an upper limit of pore size of 100 nm.

In a more particular embodiment, the porous material of the invention has a pore size of between 50 and 200 Å; preferably of between 80 and 150 Å. In a particular embodiment, the pore size has been measured with any method known in the art; preferably nitrogen adsorption methods; preferably the pore size has been calculated from N₂ physisorption isotherms measured by a nitrogen adsorption method; more preferably using a Micromeritics ASAP 2460 automated gas adsorption instrument.

In a more particular embodiment, the porous material of the invention has a surface area of between 50 and 200 m²·g⁻¹; preferably of between 80 and 150 m²·g⁻¹. In a particular embodiment, the surface area has been measured with any method known in the art; preferably nitrogen adsorption methods.

Any porous material which exhibits intrusion-extrusion cycle with the pressure transmission fluid may be used in the present invention. In an embodiment, the porous material comprises silica, alumina, aluminosilicate, zeolite, metal-organic framework (MOF) [including the subclass of Zeolitic Imidazolate Frameworks (ZIFs)], covalent-organic framework (COF), porous vitreous materials or a mixture thereof; preferably silica, alumina, aluminosilicate or a mixture thereof; more preferably silica.

In a more particular embodiment, the porous material, such as silica, is a porous material grafted, preferably with a lyophobic compound. This lyophobic compound is normally an organic compound. In a more particular embodiment, the lyophobic compound is a perhaloalkane; preferably a perfluoroalkane, more preferably a linear or branched perfluoroalkane containing from 1 to 10 carbon atoms; even more preferably a linear or branched perfluoroalkane containing from 5 to 9 carbon atoms; even much more preferably a linear or branched perfluoroalkane containing 8 carbon atoms.

In a particular embodiment, the porous material is functionalized or grafted silica, preferably silica grafted with a perhaloalkane (e.g. perfluoroalkane).

In another particular embodiment, the porous material is a MOF such as a ZIF.

In an embodiment, the porous material is submerged or immersed in the pressure transmission fluid.

### Method

In a second aspect, the invention is directed to a method of storing and/or delivering electricity comprising the steps of:
a) providing
   - a shock absorber according to the invention and in any of its particular embodiments; and
   - at least one pressure transmission fluid;
b) compressing the at least one pressure transmission fluid to reach a pressure inside the at least one intrusion/extrusion chamber (4.1, 4.2) of the shock absorber such that the pressure transmission fluid intrudes into the porous material;
c) decompressing the at least one pressure transmission fluid to reach a pressure inside the at least one intrusion/extrusion chamber (4.1, 4.2) of the shock absorber such that said pressure transmission fluid extrudes out of the porous material; and
d) optionally, repeating steps (b) and (c) for a number of times sufficient to store and/or deliver electricity.

In an embodiment, when the shock absorber comprises the porous material being in contact (such as electrical contact) or in close proximity with the two electrodes of the at least a pair of electrodes; then, the method further comprises a step of applying a bias voltage between those electrodes; preferably a bias voltage of over 0.1 V.

In an embodiment, when the shock absorber comprises the porous material being in contact (such as electrical contact) or in close proximity with only one of the two electrodes of the at least a pair of electrodes; then, the method optionally comprises a step of applying a bias voltage between those electrodes; preferably a bias voltage of between 0 and 0.1 V.

The compression of step (b) and the decompression of step (c) of the at least one pressure transmission fluid is done by applying (i.e. increasing) or removing (i.e. reducing or stopping) external stresses. In a particular embodiment, the compression of step (b) and the decompression of step (c) of the pressure transmission fluid is done by applying or removing pressure, temperature or an external electromagnetic field; preferably by applying or removing pressure or temperature to the pressure transmission fluid; more preferably by applying or removing pressure.

The amount of external stress for achieving intrusion/extrusion will depend primarily on the porous material used and can be easily determined by the skilled person.

In a particular embodiment, the compression of step (b) of the pressure transmission fluid is done by applying pressure to the at least one pressure transmission fluid and the decompression of step (c) is performed by removing the pressure applied in the previous step.

In an embodiment, the compression of step (b) and the decompression of step (c) of the at least one pressure transmission fluid is done by moving the rod (2) inside the cylindrical body (1) of the shock absorber in a reciprocating longitudinal movement in response to an external force; preferably in a reciprocating and regularly repeated movement; particularly, by doing a repetitive up-and-down or back-and-forth linear movement, particularly in response to an external force.

In a more particular embodiment, the compression of step (b) of the at least one pressure transmission fluid is done by applying a pressure of at least 10 MPa, at least 20 MPa, at least 30 MPa or at least 40 MPa to the pressure transmission fluid.

In a more particular embodiment, the compression of step (b) of the at least one pressure transmission fluid is done by applying a pressure of between 10 and 100 MPa to the pressure transmission fluid; preferably between 10 and 80 MPa; more preferably of between 10 and 70 MPa.

### Uses

In another aspect, the invention is directed to the use of the shock absorber according to the invention and in any of its particular embodiments to store and/or deliver electricity.

To this end, the shock absorber of the present invention may be used individually, as modular system, or in combination with other energy storage technologies and may be integrated into or with various systems and/or devices to improve efficiency, address energy demands, etc.

Furthermore, the shock absorber of the invention may be used in a variety of applications having different energy delivery and/or storage needs, including, but not limited to, very large scale applications (e.g., utilities, functioning as a green energy source for a smart grid, energy storage for use in combination with renewable energy resources such as wind and solar power, etc.) and smaller applications (e.g. backup power, residential power, electromobility sector, etc.).

The shock absorber according to the invention and in any of its particular embodiments can be used to store and/or deliver electricity in a wide range of applications across various industries such as aerospace, railway, industrial machinery, building, medical equipment, elevators, wind turbines, consumer electronics sector, shipping industry and in vehicles. For example: in the aerospace sector, shock absorbers are used in aircraft landing gear to absorb impact during landing and in helicopters to dampen vibrations and improve stability; in railway systems, shock absorbers are used in trains and trams to reduce vibrations and enhance passenger comfort, particularly on uneven tracks; in industrial machinery, shock absorbers are integrated into heavy equipment, such as construction vehicles, manufacturing robots and conveyor systems, to reduce wear and improve precision by dampening vibrations; in vehicles as one of the main components of the suspension system that prevents vibrations and sudden impacts from the road from being directly transferred to the vehicle body during driving, minimizing the oscillation movement in the spring to provide both safety and comfort; in the bicycle and motorcycle industry, shock absorbers are used in suspension systems for off-road bikes, mountain bikes, and motorcycles, providing a smoother ride on rough terrain; furthermore, shock absorbers are utilised in buildings and bridges in areas prone to seismic activity to absorb seismic energy, thereby reducing structural damage and improving resilience; in the medical equipment sector, shock absorbers are used in devices such as hospital beds and surgical tables to minimise movement and ensure stability during use; elevators and escalators rely on shock absorbers to provide smooth starts and stops, enhancing rider comfort and safety; wind turbines employ shock absorbers in their blades and towers to mitigate vibrations caused by high winds, thereby reducing structural fatigue and enhancing efficiency; in the consumer electronics sector, shock absorbers are used in devices such as cameras to stabilise lenses and protect sensitive components from impact, and for example, in the shipping and logistics industry, shock absorbers are used in packaging and container transport systems to protect fragile items from damage during transit.

In an embodiment, the use of the shock absorber according to the invention and in any of its particular embodiments is to store and/or deliver electricity in a vehicle, preferably in a suspension system of the vehicle. Similarly, the invention is also directed to a vehicle comprising the shock absorber according to the invention and in any of its particular embodiments, preferably in a suspension system of the vehicle. Examples of vehicles include but are not limited to a car, motorcycle, bicycle, plane, or truck.

An additional aspect of the present invention is directed to a method for storing or delivering electricity comprising the shock absorber of the present invention in a vehicle.

The present invention covers all possible combinations of particular and preferred embodiments described herein. Additional objects, advantages and features of the invention will become apparent to those skilled in the art upon examination of the description or may be learned by practice of the invention. The following examples are provided by way of illustration, and they are not intended to be limiting of the present invention.

### EXAMPLES

### EXAMPLE 1: Regenerative intrusion-extrusion shock absorber

In this example, a regenerative intrusion-extrusion shock absorber was fabricated and tested. The regenerative intrusion-extrusion shock absorber (or damper) of the present example is able to generate electricity and also to dissipate mechanical energy by intrusion-extrusion cycles.

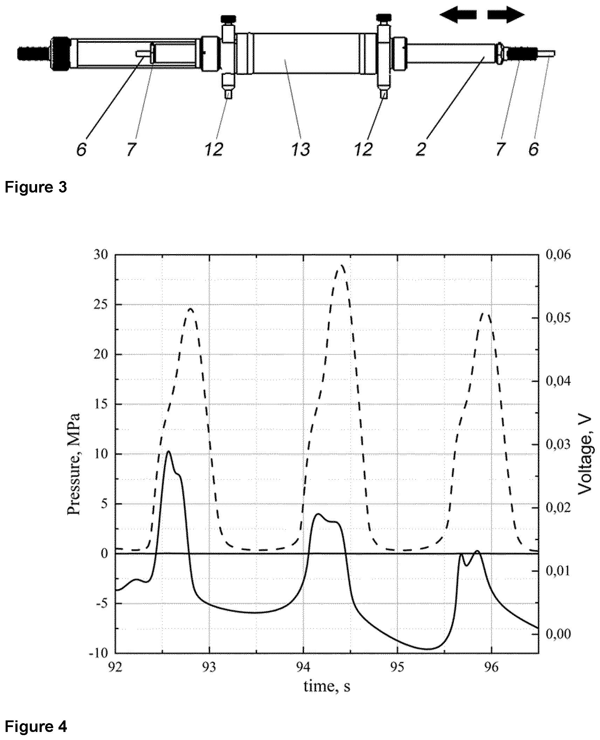

Figure 1 shows a sectional view of a regenerative intrusion-extrusion shock absorber according to the present invention. In addition, Figure 3 shows an external view of this regenerative intrusion-extrusion shock absorber.

The shock absorber of the present example comprised a hollow cylindrical body (1) (or cylinder) and a rod (2) that comprised a tightly fastened piston (3). Said piston (3) formed a liquid seal between the cylindrical body (1) and the rod (2). In addition, said piston could move left and right inside the cylindrical body (1) in response to an external force applied to the rod (2). In addition, the cylindrical body (1) was adapted for guiding the rod (2).

The rod (2) and the piston (3) combined with the cylindrical body (1) to define or form two hydraulic chambers (9.1, 9.2) [left (9.1) and right chamber (9.2)], each one being divided in turn in two subchambers: a central or inner working subchamber (2.1, 2.2) and a side or outer subchamber (3.1, 3.2).

In addition, the left subchamber (3.1) was in fluidic communication with the left working subchamber (2.1) through two orifices in the rod (2) wall, forming the left hydraulic chamber (9.1). Similarly, the right subchamber (3.2) was in fluidic communication with the right working subchamber (2.2) through two orifices in the rod (2) wall, forming the right hydraulic chamber (9.2).

In addition, all the subchambers (3.1, 3.2, 2.1 and 2.2) that formed the left and right hydraulic chambers (9.1 and 9.2) were filled with a hydraulic fluid (for example, a liquid such as mineral oil). The hydraulic chambers (9.1 and 9.2), specifically through their subchambers (3.1, 3.2), were also in fluidic communication with a compensating external chamber (13) through valves (10.1 and 10.2) and throttles (11.1 and 11.2).

Each of the working subchambers (2.1 and 2.2) comprised an inner cylindrical chamber (4.1, 4.2) for intrusion/extrusion filled with water as pressure transmission liquid. The intrusion/extrusion cylindrical chambers (4.1, 4.2) were divided in two inner compartments (4a.1, 4b.1 and 4a.2, 4b.2) by a filter (5). In addition, said chambers (4.1, 4.2) were also sealed by one or two seals (8). The first compartments of the cylindrical case (4a.1, 4a.2) were filled only with distilled water and the second compartment of the cylindrical case (4b.1, 4b2) were filled with a porous material and water. A FFP3 filter with pore size below 0.6 µm (5) that is water permeable and impermeable for the porous material separated said compartments. The first compartments (4a.1, 4a.2) were made of a rigid material and the second compartments were made of a flexible material (4b.1, 4b2) that is adapted for bending or compress/decompress under pressure changes.

The porous material used was porous powder silica (GRACE^{®} 150) which was previously grafted with perflouroalkane (CₙF₂ₙ₊₁, n=8). Water is able to intrude or extrude the porous material. The porous material has a pore size of about 110 Å. The surface area of the porous material after being grafted was 97 m²·g⁻¹. The pore size and the surface area of the porous material grafted with perflouroalkane has been measured by nitrogen adsorption methods. In particular, the pore size of the porous material was obtained using Micromeritics ASAP 2460 automated gas adsorption instrument. N₂ physisorption isotherms were measured at -196 °C after outgassing the samples at 200 °C under vacuum for 15 h. The specific surface area of the samples was calculated using the BET equation. The pore size distribution was estimated by applying the Barrett-Joyner-Halenda (BJH) model to the desorption isotherm branch.

The following protocol was used for grafting the silica material: Firstly, 1 g of GRACE ^{®}150 (G150) silica was weighted and washed with dichloromethane. Then it was dried overnight at 120 °C under vacuum. After that, the washed silica was dispersed in an absolute ethanol/ammonia solution mixture (88 ml/4 ml respectively) under stirring for 30 minutes at 50 °C, until proper dispersion was reached. Then, 0.55 ml of 1H,1H,2H,2H-perfluorooctyltriethoxysilane (PFOTES) were added dropwise to this mixture letting stirring for 120 hours. After 5 days, a white precipitate was centrifuged and washed three times with absolute ethanol. Finally, the sample was dried overnight at 70 °C. The advantage of this protocol is that it does not involve expensive solvents or a lot or energy.

The working subchambers (2.1) and (2.2) comprised two electrodes: one electrode (6) shaped as a stick, and a counter electrode (7) shaped as a hollow cylinder. Both electrodes were made of the same material. The electrode (6) entered the chambers (4.1 and 4.2) through two seals (8). Said electrode (6) was in direct contact or close proximity with the porous material of the compartments (4b.1, 4b.2). In addition, both electrodes were separated by a gap between them.

As can be seen in Figure 1, the porous material of one of the inner compartments of the intrusion/extrusion chamber (4) contacted or was in close proximity with one of the electrodes (6). In addition, said porous material was also immersed in water.

The regenerative intrusion-extrusion shock absorber works as follows: when the piston (3) of the rod (2) is positioned in the middle (in the centre) of the cylindrical body (1), the inner volume of the hydraulic chambers (9.1 and 9.2) is similar. The hydraulic chambers (9.1 and 9.2) are under a pressure close to atmospheric pressure. Also, there is no significant pressure difference between the hydraulic chambers (9.1 and 9.2). Therefore, in this case the distilled water does not intrude or extrude the porous material of the second compartment (4b.1, 4b.2) of the intrusion/extrusion chamber (4.1, 4.2) of the left or of the right side of the shock absorber.

When the piston of the rod (2) moves to the right side of the hollow cylindrical body (1) due to an external compression or force, the inner volume of the hydraulic chambers (9.1 and 9.2) became different. Then, the hydraulic chambers (9.1 and 9.2) had a pressure difference between them (the valve (10.2) is closed): the left hydraulic chamber (9.1, 2.1 and 3.1) is under less pressure than the right hydraulic chamber (9.2, 2.2 and 3.2). The hydraulic fluid of the right hydraulic chamber (9.2, 2.2 and 3.2) exerts pressure on the flexible walls of the second compartment (4b.2) of the right cylindrical chamber (4.2) that comprises water and the porous material. Therefore, water intrudes the porous material of the right cylindrical chamber (4.2) creating an electric potential between the electrodes (6, 7) of the right side. Simultaneously, water may extrude the porous material of the second compartment (4b.1) of the left cylindrical chamber (4.1) creating also an electric potential between the electrodes (6, 7) of the left side which is transferred to an external circuit. The increase in the volume of the the left hydraulic chamber (9.1, 2.1 and 3.1) is compensated by the hydraulic fluid from the compensating chamber (13) through the open left valve (10.1).

When the piston of the rod (2) moves to the left side of the hollow cylindrical body (1) due for example to an external decompression or force, the opposite happens: the left hydraulic chamber (9.1, 2.1 and 3.1) is under more pressure than the right hydraulic chamber (9.2, 2.2 and 3.2) due to throttle (11.1) and closed valve (10.1). Then, the distilled water intrudes the porous material of the second compartment (4b.1) of the left cylindrical chamber (4.1), and the distilled water extrudes the porous material of the second compartment (4b.2) of the right cylindrical chamber (4.2). During further external compressions and decompression cycles, the same phenomena occurs respectively in each chamber; intrusion in one chamber and simultaneous extrusion in the other chamber. The intrusion and extrusion processes generate electricity (they produce a voltage), which was recorded and/or stored.

A MS1000+ vibration bench from MSG^{®} equipment was used to test the regenerative intrusion-extrusion shock absorber described above under several cycles of compression-decompression. The tests were performed at room temperature and under 1-3 Hz frequency. During testing of the regenerative intrusion-extrusion shock absorber described above the following were recorded: the force applied to the shock absorber, the oscillation frequency, the stroke of the shock absorber rod (2), and the resulting electrical signal. In addition, a pressure sensor (12) was connected to the shock absorber (see Fig. 3).

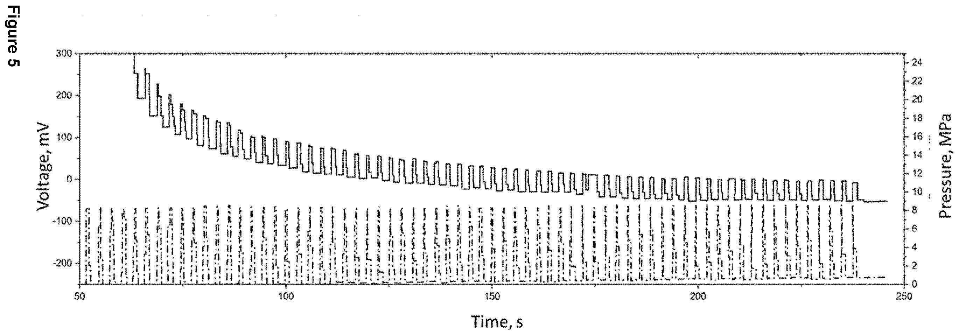

Results in Figure 4 show the pressure (MPa, dashed line) and voltage (V, solid line) variation during three compression-decompression cycles of the regenerative intrusion-extrusion shock absorber. The results in Figure 4 show the voltage recorded between the electrode and the counter electrode and the corresponding pressure variation in the compression-decompression cycle of the regenerative intrusion-extrusion shock absorber. It can be seen that when the pressure signal reaches a plateau, a voltage is generated between the electrode and the counter electrode. This signal persists throughout several cycles as shown in Figure 5. In particular, Figure 5 shows the pressure (dashed line) and voltage (solid line) variation during compression-decompression cycling of the regenerative intrusion-extrusion shock absorber. The data of said figure showed a characteristic Cyclic Force-Displacement.

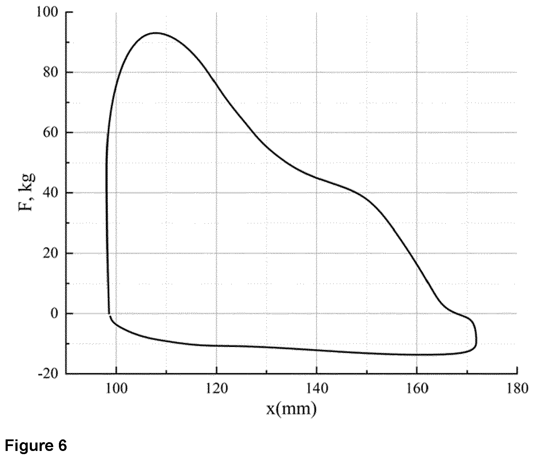

Thus, the regenerative intrusion-extrusion shock absorber of this example is able to generate electricity and also dissipate the mechanical energy of the shocks. This can be observed by a large hysteresis loop in the force-displacement diagram typical of non-regenerative intrusion-extrusion shock absorbers shown in Figure 6. Figure 6 shows a force vs displacement diagram of the generator intrusion-extrusion shock absorber.

Results showed that the regenerative intrusion-extrusion shock absorber resulted in a pronounced voltage generation during water intrusion-extrusion cycles under compression-decompression cycles. In summary, results showed that a regenerative intrusion-extrusion shock absorber comprising porous material in direct contact with only one of the two electrodes, leads to a pronounced voltage generation during water intrusion-extrusion cycles under compression-decompression cycles and to a stable amplitude of the generated voltage (see for example Figures 4 and 5).In addition, the regenerative intrusion-extrusion shock absorber was able to efficiently dissipate mechanical energy.

In the present example, the location of the porous material layer in the regenerative intrusion-extrusion shock absorber, being in contact with or close to just one electrode, provides asymmetry to the circuit, which generates a difference of potentials between the electrodes. Therefore, the fact that the porous material of the regenerative intrusion-extrusion shock absorber only contacts one of the two electrodes, makes unnecessary the use of a conventional bias voltage between the electrodes, thus, leading to a reduced degradation and a high stability of said porous material during its use.

Other advantage of the regenerative intrusion-extrusion shock absorber according to the present invention is that no external generators (such as piezo generators) are required to harvest electrical energy. Another advantage is that water can be used as the intruding/extruding fluid in the regenerative intrusion-extrusion shock absorber. This makes the regenerative intrusion-extrusion damper stronger, more robust and more cost effective.

## Claims

1. A shock absorber comprising:
- a cylindrical body (1);
- a rod (2) comprising a piston (3); and
- at least a pair of electrodes (6, 7);
wherein the cylindrical body (1) is adapted for guiding the rod (2);
wherein the rod (2) is adapted for moving reciprocally inside the cylindrical body in response to an external force;
wherein the piston (3) of the rod (2) is adapted for sealing the cylindrical body (1) defining at least one intrusion/extrusion chamber (4.1, 4.2) adapted for containing a pressure transmission fluid;
wherein the at least one chamber (4.1, 4.2) comprises a porous material suitable for intrusion/extrusion of the pressure transmission fluid; and
wherein the shock absorber is **characterized in that** the porous material is in contact or in close proximity with one or with two electrodes of the at least a pair of electrodes (6, 7), thus being capable of generating electricity.

2. The shock absorber according to claim 1, wherein the porous material is in contact or in close proximity with only one electrode (6) of the at least a pair of electrodes (6, 7), thus being capable of generating electricity with a bias voltage ranging from 0 to 0.1 V.

3. The shock absorber according to any of claims 1 or 2, wherein the porous material comprises silica, alumina, aluminosilicate, zeolite, metal-organic framework, covalent-organic framework, porous vitreous materials or a mixture thereof; preferably wherein the porous material comprises silica, alumina, aluminosilicate or a mixture thereof; more preferably wherein the porous material is grafted with a perhaloalkane; preferably is silica grated with perfluoroalkane.

4. The shock absorber according to any one of claims 1 to 3, further comprising the pressure transmission fluid; preferably wherein the pressure transmission fluid is a non-ionic liquid; more preferably water.

5. The shock absorber according to any one of claims 1 to 4, wherein the rod (2) comprising a piston (3) further combines with the cylindrical body (1) to define at least one hydraulic chamber (9.1, 9.2), adapted for containing a pressure transmission fluid, so that the at least one hydraulic chamber (9.1, 9.2) is in physical contact with the at least one intrusion/extrusion chamber (4.1, 4.2) allowing the transmission of pressure changes between the pressure transmission fluids of the at least one hydraulic chamber (9.1, 9.2) and of the at least one intrusion/extrusion chamber (4.1, 4.2).

6. The shock absorber according to any one of claims 1 to 5, wherein the shock absorber comprises two pair of electrodes (6, 7), two intrusion/extrusion chambers (4.1, 4.2) and two hydraulic chambers (9.1, 9.2); preferably wherein each of said hydraulic chambers (9.1, 9.2) comprises a working hydraulic subchamber (2.1, 2.2) and an hydraulic subchamber (3.1, 3.2).

7. The shock absorber according to any one of claims 5 to 6, wherein the physical contact between the at least one hydraulic chamber (9.1, 9.2), or its subchambers (2.1, 2.2, 3.1, 3.2) if present, and the at least one intrusion/extrusion chamber (4.1, 4.2) is done through a wall configured to bend that partially or totally encloses the at least one chamber (4.1, 4.2).

8. The shock absorber according to any one of claims 5 to 7, wherein the pressure transmission fluid of the at least one intrusion/extrusion chamber (4.1, 4.2) is different from the pressure transmission fluid of the at least one hydraulic chamber (9.1, 9.2); preferably wherein the pressure transmission fluid of the at least one intrusion/extrusion chamber (4.1, 4.2) is water; and/or the pressure transmission fluid of the at least one hydraulic chamber (9.1, 9.2) is an oil.

9. The shock absorber according to any one of claims 1 to 8, wherein at least one intrusion/extrusion chamber (4.1, 4.2) comprises a filter (5) configured to allow the pressure transmitting fluid to pass there through and to not allow the porous material to pass there through; wherein the filter divides the intrusion/extrusion chamber into a first compartment (4a.1, 4a.2) and a second compartment (4b.1, 4b.2).

10. The shock absorber according to any one of claims 1 to 9, wherein one electrode (6) of the two electrodes (6, 7) of the at least one pair of electrodes (6, 7) is shaped as a stick.

11. A method of storing and/or delivering electricity comprising the steps of:
a) providing
- a shock absorber according to any one of claims 1 to 10; and
- at least one pressure transmission fluid;
b) compressing the at least one pressure transmission fluid to reach a pressure inside the at least one intrusion/extrusion chamber (4.1, 4.2) of the shock absorber such that the at least one pressure transmission fluid intrudes into the porous material;
c) decompressing the at least one pressure transmission fluid to reach a pressure inside the at least one intrusion/extrusion chamber (4.1, 4.2) of the shock absorber such that said at least one pressure transmission fluid extrudes out of the porous material; and
d) optionally repeating steps (b) and (c).

12. The method according to claim 11, wherein the compression of step (b) and the decompression of step (c) of the pressure transmission fluid is done by moving the rod (2) reciprocally inside the cylindrical body (1) of the shock absorber in response to an external force.

13. Use of the shock absorber according to any one of claims 1 to 10 to store and/or deliver electricity, preferably in a vehicle and more preferably in a suspension system of a vehicle.

14. A vehicle, preferably a car, motorcycle, bicycle, plane, or truck, comprising the shock absorber according to any one of to any one of claims 1 to 10, preferably in a suspension system of the vehicle.
